# EUROPEAN PATENT SPECIFICATION

(11) **EP 2 861 687 B1**
(45) Date of publication and mention of the grant of the patent: **15.08.2018**
(21) Application number: 13742751.4
(22) Date of filing: 10.06.2013
(51) Int. Cl.: C09J 183/04, C08K 3/22, C08K 3/36, C08L 83/04, G02B 1/04

(54) **OPTICAL COMPOSITION**
OPTISCHE ZUSAMMENSETZUNG
COMPOSITION OPTIQUE

(30) Priority: 14.06.2012 US 201261659466 P
(43) Date of publication of application: 22.04.2015
(73) Proprietor: Lumileds Holding B.V., 1118 BG Schiphol (NL)
(72) Inventor: BOHMER, Marcel Rene, NL-5656 AE Eindhoven (NL); JAGT, Hendrik Johannes Boudewijn, NL-5656 AE Eindhoven (NL); DE LAAT, Antonius Wilhelmus Maria, NL-5656 AE Eindhoven (NL)
(74) Representative: Rüber, Bernhard Jakob
(86) International application number: PCT/IB2013/054743
(87) International publication number: WO 2013/186689

(56) References cited:
- EP-A1- 2 068 177
- US-A1- 2006 105 480
- US-A1- 2007 185 261
- US-A1- 2010 025 711

## Description

### FIELD OF THE INVENTION

The present invention relates to an optical composition, a bonding layer comprising an optical composition, an optical system comprising an optical composition, a method for preparing an optical composition, an optical bonding layer and an optical system, respectively, and the use of an optical composition.

### BACKGROUND OF THE INVENTION

An adhesive or an optical bonding layer for optical elements should provide optically transparent connections. Such connections are usually exposed to high light fluxes and potentially elevated temperatures. In case organic components are used, the exposure to light and elevated temperatures may often lead to yellowing leading to absorption in the adhesive resulting in loss of light. For that reason, silicones are often employed which have a good temperature and light stability.

Furthermore, for adjusting the refractive index of an optical bond, e.g. increase the refractive index to achieve high light outcoupling efficiency from solid state light emitting devices, nanoparticles having a desirable refractive index can be mixed with the silicone material. However, to stabilize the particles, dispersants are required. Since conventional dispersants are organic compounds, they contribute to yellowing of the adhesive/bonding layer.

The patent application US2010/0025711 A1 describes an optical bonding composition and an LED light source comprising the composition. The bonding layer comprises an amorphous organopolysiloxane network bonding the LED die and the optical element together. The optical bonding composition comprises surface-modified metal oxide nanoparticles; a silsesquioxane having the formula (R₁SiO_{1.5})ₙ(OR₄)ₙ₊₂; and a dialkoxysilane having the formula (R₂)₂Si(OR₃)₂ wherein R₁ to R₄ are organic groups and n is an integer of at least 5. However, the presence of many organic constituents makes the composition prone to yellowing when exposed to light and elevated temperature, such as the operating temperature of a solid state light source.

EP 2 068 177 A1 describes an organic-inorganic hybrid material being a silsesquioxane compound having an organic skeleton including a polymerizable functional site and an inorganic skeleton including a silsesquioxane structure. The silsesquioxane compound is used as the base material and silica fine particles are added as inorganic filler. The silica fine particles may be modified to increase the dispersibility in the silsesquioxane compound.

US 2006/105480 A1 describes a method of making a light emitting device with an encapsulant comprising a photopolymerizable composition comprising an organosiloxane and one or more additives selected from nonabsorbing metal oxide particles, semiconductor particles, phosphors, sensitizers, antioxidants, pigments, photoinitiators, catalyst inhibitors, and combinations thereof.

Hence, there is still a need in the art to provide optical compositions, capable of stabilizing particles, which offer an acceptably low risk of yellowing.

### SUMMARY OF THE INVENTION

It is an object of the present invention to overcome this problem, and to provide an optical composition having a reduced risk of yellowing.

According to a first aspect of the invention, this and other objects are achieved by an optical composition comprising a polysilsesquioxane, which comprises repeating units of the formula [R-SiO_{1.5}] , wherein each R independently is hydrogen or a C₁-C₁₂ alkyl, aryl, alkene, arylene, alkenyl or alkoxy; a polysiloxane, optionally substituted; and particles dispersed in said polysiloxane. The particles in the optical composition lack organic surface modification, and the polysilsesquioxane stabilizes these particles in the optical composition.

Polysilsesquioxanes are able to disperse particles in a suitable solvent without the need of any further organic stabilizer. The incorporation of particles in the optical composition may lead to gain in wall plug efficiency. An advantage of the present invention is, in addition to a minimized risk of yellowing, its compatibility with commercially available products. The mixing of polysilsesquioxane with polysiloxane improves the flexibility of the material and decreases the manufacturing cost of the optical composition.

In another embodiment, each R is independently a C₁-C₁₂ alkyl or aryl, preferably a C₁-C₆ alkyl or aryl, and more preferably methyl (Me) or phenyl (Ph).

In another embodiment, the polysilsesquioxane has a ratio of the number of methyl groups to the total number of R in the range of from 0.2 to 0.8, preferably in the range of from 0.3 to 0.5, and/or a ratio of the number of phenyl groups to the total number of R in the range of from 0.2 to 0.8, preferably in the range of from 0.5 to 0.7. Furthermore, the ratio of the number of hydroxyl (OH) to the total number of R (corresponding to the number of repeating units) in the optical composition may be in the range of from 0.02 to 0.1. For instance, the ratio of OH to R may be in the range of from 0.035 to 0.07.

The number average molecular weight of the polysilsesquioxane in the optical composition may be in the range of from 800 to 1500, preferably in the range of from 1000 to 1200. The weight average molecular weight of the polysilsesquioxane in the optical composition may be in the range of from 1500 to 2200, preferably in the range of from 1800 to 2000. The polysilsesquioxane may be at least partly of a ladder type structure.

The optical composition may have a content of the polysilsesquioxane corresponding to at least about 50 % by weight, for example at least about 80 % by weight, based on the total weight of the polysilsesquioxane and the polysiloxane. Furthermore, in embodiments of the invention, the weight ratio of polysilsesquioxane to polysiloxane is in the range of from 0.5 to 9, preferably in the range of from 1 to 5.

In embodiments of the invention, the polysiloxane may be a silicone resin.

In an embodiment of the invention, the optical composition comprises particles having a particle size smaller than 100 nm, preferably smaller than 70 nm, more preferably smaller than 50 nm, even more preferably smaller than 30 nm. A small particle size may be preferred due to transparency. In another embodiment, the particles have a particle size in the range of from 50 nm to 5 µm or from 100 nm to 5 µm, preferably in the range of from 100 nm to 1000 nm and more preferably in the range of from 200 nm to 500 nm.

In embodiments of the invention, the particles may comprise at least one oxide selected from the group consisting of: TiO₂, BaTiO₃, SrTiO₃, ZrO₂, Al₂O₃ and SiO₂, and mixtures thereof. Alternatively or additionally, the particles may comprise phosphor particles and/or pigment particles.

The particles in the optical composition are non-surface modified. Surface modification of the particles is not required since the silsesquioxane is able to stably disperse the particles in a silicone material.

According to another aspect of the present invention, an optical bonding layer comprising the optical composition described herein is provided.

According to another aspect, the invention provides an optical system comprising the optical composition described herein, a first optical element and a second optical element, wherein the first optical element is optically coupled to the second optical element by the optical composition. The optical system may comprise for example the optical composition, an optoelectronic device as the first optical element and another optical element, wherein said another optical element is optically coupled to the optoelectronic device by the optical composition. In an embodiment, at least one of the first optical element and the second optical element is a solid-state light source, preferably an LED, an OLED or a laser diode.

According to another aspect of the present invention, a method for preparing an optical composition comprises the steps of:
a) mixing a polysilsesquioxane with particles in a solvent, wherein the particles lack organic surface modification;
b) milling the mixture from step a) to obtain a desirable average and/or maximum particle size of the mixture;
c) mixing the mixture from step b) with a polysiloxane; and
d) optionally removing excess solvent.

A method for producing an optical bonding layer as described herein may comprise the steps of:
a) providing a substrate,
b) applying an optical composition as described herein on the substrate,
c) heating the optical composition on the substrate, and
d) curing the optical composition on the substrate or allowing the optical composition to cure.

According to another aspect of the present invention, a method for producing an optical system comprises the steps of:
a) providing a first optical element;
b) applying an optical composition as described herein onto the first optical element;
c) positioning a second optical element in contact with the optical composition; and
d) curing the optical composition or allowing the optical composition to cure.

The first optical element may be an optoelectronic device.

According to another aspect, the present invention provides the use of an optical composition as an optical adhesive.

According to another aspect, the invention provides the use of a polysilsesquioxane comprising repeating units of the formula [R-SiO_{1.5}], wherein each R independently is hydrogen or a C₁-C₁₂ alkyl, aryl, alkene, arylene, alkenyl or alkoxy, for dispersing particles in a polysiloxane material. The particles lack organic surface modification.

### BRIEF DESCRIPTION OF THE DRAWINGS

This and other aspects of the present invention will now be described in more detail, with reference to the appended drawings showing embodiment(s) of the invention.

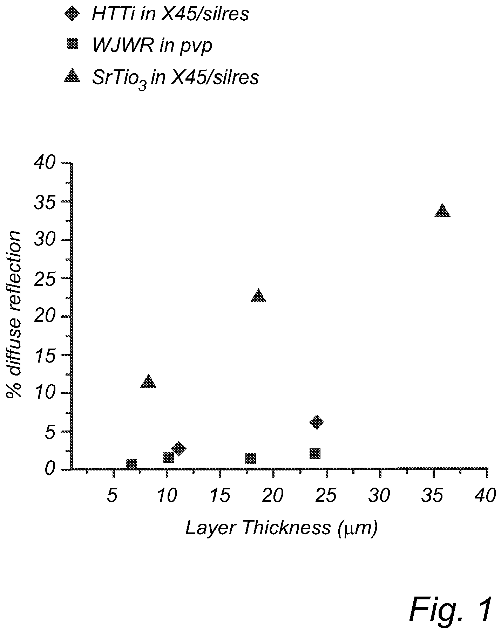

Fig. 1 is a diagram showing the diffuse reflection versus the layer thickness of optical bonding layers comprising the optical composition according to the present invention and a comparative layer.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference numerals refer to like elements throughout.

As used herein, the term optical composition means a composition at least partly light transmissive, and which optionally includes one or more further functionalities, such as scattering, wavelength conversion, etc.

As used herein, the term optical bonding layer means a layer providing an optically transparent connection between at least two optical elements.

As used herein, the term optical adhesive means an adhesive material providing an optical function, suitable to be provided as an adhesive on an optical element or between at least two optical elements.

As used herein, the term optical element includes any element having an optical function, such as light emission, light transmission, wavelength conversion, light redirection, reflection, scattering, etc. Examples include light emitting diodes, organic light amitting diodes, laser diodes and parts thereof, phosphor elements or layers, lenses, collimators, reflectors, waveguides, optical filters, etc.

The present inventors have found that a composition comprising a modified polysilsesquioxane can be used to provide a stable dispersion of particles lacking organic surface modification, thus forming an optical composition having a high refractive index, and which has adhesive properties. Advantageously, a composition according to the invention can be used as an optical bond.

The optical composition according to the invention comprises a polysilsesquioxane comprising repeating units of the formula [R-SiO_{1.5}], a polysiloxane, optionally substituted, and particles, typically nanoparticles. "R" may be selected from the group consisting of: alkyl, aryl, alkene, arylene, alkenyl, alkoxy and hydrogen.

According to the present invention, polysilsesquioxanes are able to disperse small particles lacking organic surface modification in a suitable solvent. The particles may be dispersed in the optical composition without the need for any other organic/conventional stabilizers. Hence, by using the optical composition according to the present invention instead of a conventional stabilizer, the risk of yellowing may advantageously be minimized.

The optical composition according to the present invention may further be used as an optical adhesive. Adhesives for optical components should provide an optically transparent connection of a suitable refractive index. Such connections are usually exposed to high light fluxes and potentially elevated temperatures. It is advantageous that the optical composition according to the present invention provides an excellent temperature and light stability.

A polysilsesquioxane is a polymer of silsesquioxane units which have the empirical formula R-SiO_{1.5}. A polysilsesquioxane may, completely or partly, be of a ladder-type structure or a cubic structure.

Silsesquioxanes have a thermal expansion coefficient of about 115-150 ppm/K. The thermal expansion coefficient is relatively low compared to conventional silicones such as Elastosil (supplied by Wacker) and KJR9226 (supplied by Shin Etsu) (250-400 ppm/K) used in optical arrangements. Silsesquioxanes have a heat conductivity of about 1 W/mK, which is relatively high compared to that of conventional silicones (0.2 W/mK). Further, silsesqioxanes are highly stable materials.

A silsesquioxane material is solid at room temperature, but at elevated temperatures of about 80-120 °C, low molecular weight silsesquioxanes soften, which increases tack. However, a composition comprising a polysilsesquioxane, a polysiloxane and nanoparticles may be tacky already at room temperature, as a polysiloxane normally is tacky at such temperature.

The refractive index of silsequioxanes typically depends on the functional side-group, R. Preferably, in the present invention, R of each silsesquioxane unit is independently a C₁-C₁₂ alkyl or aryl, preferably a C₁-C₆ alkyl or aryl, and more preferably methyl (Me) or phenyl (Ph). A silsesquioxane with a methyl group as functional side-group, R, has a refractive index of about 1.39. A silsesquioxane with a phenyl group as functional side-group, R, has a refractive index of about 1.59. Thus, the refractive index of the polysilsesquioxane may, to a certain extent, be tuned by suitably choosing R. Since the R group of one silsesquioxane unit may be different from that of another silsesquioxane unit, a total composition of R may comprise various groups within the above definition of R. For example, the polysilsesquioxane of the optical composition may comprise some silsesquioxane units where R is methyl, and other silsesquioxane units where R is phenyl. The ratio between the number of methyl groups to the total number of R groups may be in the range of from 0 to 1, preferably in the range of from 0.2 to 0.8, more preferably in the range of from 0.3 to 0.5. The ratio between the number of phenyl groups to the total number of R groups may be in the range of from 0 to 1, preferably in the range of from 0.2 to 0.8, more preferably in the range of from 0.5 to 0.7. Thus, the optical composition according to the present invention may have various ratios of a specific type of R group to the total amount (all types) of R groups.

The range of refractive index of silsesquioxanes may be slightly broader than the range of refractive index of conventional silicones (1.4-1.56). By combining a polysilsesquioxane with high refractive index nanoparticles according to embodiments of the invention, the refractive index of the optical composition may be up to 1.8 or even 2.0. However, depending on the application, the refractive index may also be adjusted to a lower value by suitably choosing the polysilsesquioxane and/or the particles.

An example of a material comprising polysilsesquioxane that may be used in the present invention is the commercially available product ABCR127719 (supplied by ABCR) having a ratio of the number of phenyl to the total number of R of about 0.7 and a ratio of the number of methyl to the total number of R of about 0.3. Another example of a material comprising polysilsesquioxane that may be used in the present invention is Silres604 (Wacker) having a ratio of the number of phenyl to the total number of R of about 0.5 and a ratio of the number of methyl to the total number of R of about 0.5.

The polysilsesquioxane may further comprise hydroxyl groups. The ratio of the number of hydroxyl (OH) to the total number of R may be in the range of from 0.02 to 0.1. The ratio of the number of hydroxyl to the total number of R may for instance be in the range of from 0.035 to 0.07. In a polysilsesquioxane of a complete cage structure, no residual OHgroups are present. In polysilsesquioxane of a ladder-type structure and/or a partly open cage structure, some OH-groups are typically present. An example is Silres604 (supplied by Wacker) having a ratio of OH to R in the range of from about 0.035 to about 0.07. It is believed that the hydroxyl groups may be responsible for an interaction with nanoparticles in the form of mainly van der Waals forces but also electrostatic interaction and/or steric hindrance.

A polysilsesquioxane of the optical composition according to the present invention may have a number average molecular weight in the range of from 800 to 1500, preferably in the range of from 1000 to 1200. An analysis of a material comprising polysilsesquioxane of the type Silres604 (Wacker) showed a number average molecular weight of about 1100 for the polysilsesquioxane.

Furthermore, the polysilsesquioxane of an optical composition according to the present invention may have a weight average molecular weight in the range of from 1500 to 2200, preferably in the range of from 1800 to 2000. An analysis of a material comprising polysilsesquioxane of the type Silres604 (Wacker) showed a weight average molecular weight of about 1900 for the polysilsesquioxane.

The ratio of weight average molecular weight to number average molecular weight for the polysilsesquioxane may be in the range of from 1.2 to 2, preferably in the range of from 1.4 to 1.8, more preferably about 1.6.

The optical composition of the invention may further comprise a polysiloxane, typically a conventional silicone resin.

A polysiloxane is a polymer of siloxanes with the empirical formula R'₂SiO. The R' of each repeating unit may independently be an organic group selected from the group consisting of: hydrogen, an alkyl group, an alkene group and an aryl group. The alkyl group may be a methyl group. The alkene group may be a vinyl group. The aryl group may be a phenyl group. The polysiloxane may, for instance, be a silicone resin.

By mixing the polysilsesquioxane and a polysiloxane, an increased flexibility of the optical composition may be obtained if the content of polysiloxane is increased with respect to the content of polysilsesquioxane. Further, the mixing of polysilsesquioxane and polysiloxane in the optical composition may provide a more cost-efficient material. The polysiloxane, due its tack, also provides good adhesive properties.

The ratio of polysilsesquioxane to polysiloxane in the optical composition according to the invention may vary in a range of from 0.5 to 9, preferably in the range of from 1 to 5. If the ratio of polysilsesquioxane to polysiloxane is larger than 9, there is a risk that the optical composition may become too brittle for some applications. On the other hand, if the ratio is too small, smaller than 0.5, there is a risk that the particles are not sufficiently well dispersed in the optical composition.

A particle is defined as a small object that behaves as a whole unit in terms of its transport and properties. The particles of the optical composition of the invention may have an average particle size in the range of from 1 nm up to 10 µm, preferably from 1 nm to 2 µm. In some embodiments of the invention, the particles may be nanoparticles. In terms of particle diameter or average particle size, nanoparticles may have a dimension in the range of from about 1 nm and less than 1 µm, typically from 1 nm to 500 nm.

In embodiments of the present invention, the particles may comprise at least one oxide. The oxide may be selected from the group consisting of: TiO₂, BaTiO₃, SrTiO₃, ZrO₂, Al₂O₃ and SiO₂. A preferred nanoparticle is SrTiO₃. The oxide particles may advantageously be nanoparticles having an average particle size of 100 nm or less, preferably 70 nm or less, more preferably 50 nm or less, even more preferably 30 nm or less. An advantage of using small particles is transparency. By mixing polysilsesquioxane, polysiloxane and said oxide particles, a transparent, more thermally conductive and heat stable optical composition having a suitable refractive index may be obtained. In particular, by using nanoparticles comprising at least one oxide selected from the group consisting of: TiO₂, BaTiO₃, SrTiO₃, ZrO₂ and Al₂O₃, a transparent, high refractive index and heat stable optical composition may be obtained.

In alternative embodiments, the particles may comprise phosphor particles and/or pigment particles. The phosphor particles and/or pigment particles may have an average particle size in the range of from 100 nm to 20 µm, typically from 100 nm to 1 µm, such as from 200 nm to 500 nm.

By mixing polysilsesquioxane, polysiloxane and nanoparticles comprising phosphor particles of a relatively large size, typically micrometer size, to an optical composition according to the present invention, high refractive index scattering coatings and a luminescent layer with improved thermal conductivity may be obtained.

By mixing polysilsesquioxane, polysiloxane and nanoparticles comprising pigment particles of a particle size typically in the range of from 200 to 400 nm to an optical composition according to the present invention, a stable, colored material, for example a white reflector material, may be obtained.

In some embodiments, the particles of the optical composition may comprise one or more of oxide particles, phosphor particles, pigment particles. Said particles may optionally be nanoparticles.

According to the present invention, the particles are not surface modified. By the expression "not surface modified" is meant that the particles do not have a surface that is chemically modified, e.g. to stabilize the particles in a dispersion. In fact, the particles used in the present invention lack an organic surface modification. "Organic surface modification" does not comprise e.g. removable contamination originating e.g. from volatile hydrocarbons.

According to the present invention, the particles are dispersed by the polysilsesquioxane, such as AB127719 (ABCR) or Silres604 (Wacker) in a solvent. An example of a suitable solvent includes butylacetate.

To prepare the optical composition according to the invention, the particles may be mixed with the polysilsesquioxane and the solvent. After mixing, the solvent may be removed. Thus, the particles are substantially only dispersed in the polysilsesquioxane, with which the particles may interact by weak binding forces only. The particles, according to the present invention, are not surface modified by any surface-modifier that is covalently attached to the particles or by a group known to have a strong interaction such as a carboxylate, phosphate or sulphate.

By incorporating nanoparticles in the optical composition a gain in wall-plug efficiency may be achieved. Wall-plug efficiency, also called radiant efficiency, is the energy conversion efficiency with which the system converts electrical power into optical power. It is defined as the ratio of the radiant flux, i.e. the total optical output power, to the input electrical power.

An optical bonding layer may be formed of the optical composition according to the present invention. This optical bonding layer may be relatively thick, crack-free and transparent. An optical bonding layer may optionally be used to connect two optical elements. An optical bonding layer may also constitute the outer layer, such as a dome or other protective or encapsulating structure, of an optical device, such as an optoelectronic device for example a solid-state light source based light emitting arrangement.

An optical system may comprise the optical composition and at least one optical element. The optical composition may be arranged in direct physical contact with the least one optical element. In embodiments of the invention, the optical system may comprise the optical composition, a first optical element and a second optical element, wherein the first optical element is optically coupled to the second optical element by the optical composition according to embodiments of the invention. The first optical element and/or the second optical element may be or form part of an optoelectronic device. The optoelectronic device may be a solid-state based light emitting device, incorporating for example an LED, an OLED or a laser diode.

Advantageously, the optical composition according to the invention may exhibit a refractive index of 1.78 at 450 nm (or at least equal to that of alumina), which is necessary to avoid light losses in optical systems where high refractive index transparent materials, such as sapphire of polycrystalline alumina, are used in thermal management of a LED module.

The optical composition described above may be produced by:
a) mixing polysilsesquioxane and particles with a solvent, which particles lack organic surface modification, wherein the particles may be aggregated or agglomerated and of a particle size of about 100-5000 nm,
b) milling the mixture from step a) to obtain a desirable average particle size of the mixture, preferably smaller than 100 nm,
c) optionally mixing the mixture from step b) with a polysiloxane, and
d) optionally removing excess solvent.

The steps above for producing the optical composition may take place at room temperature. The excess solvent may be removed at slightly higher temperatures under reduced pressure. The slightly higher temperature may speed up the process.

The polysilsesquioxane, which may be comprised in a polysilsesquioxane-based material such as Silres604 (Wacker) and AB127719 (ABCR), is preferably mixed with the chosen particles, preferably comprising an oxide, a phosphor and/or a pigment, and a solvent such as butylacetate.

The solvent may be any conventional solvent which is compatible with both the polysilsesquioxane and the polysiloxane and which may be removed under reduced pressure without the need of a much elevated temperature. The mixture obtained when mixing the polysilsesquioxane, the particles and the solvent, may be milled using milling equipment, e.g. zirconia milling balls, ZrSiO₄ milling balls, Al₂O₃ milling balls, zirconia beads on a roller conveyor or a bead mill (Dispermat; Netzsch). The purpose of the milling is to reach a desirable average particle size. The milled mixture, obtained when mixing and milling the polysilsesquioxane, the nanoparticles and the solvent, may be further mixed with a polysiloxane. The polysiloxane may be a silicone resin as described above.

Removal of excess solvent may be carried out under normal or reduced pressure. The removal of excess solvent helps to increase the viscosity of the composition making it suitable for dispensing. Also in latter stages, solvent may be removed by letting the composition evaporate.

A method for producing an optical bonding layer according to embodiments of the invention may comprise the steps of:
a) providing a substrate;
b) dispensing an optical composition on the substrate;
c) heating the optical composition on the substrate; and
d) curing the optical composition on the substrate or allowing the optical composition to cure.

The substrate may be any element of an optical system, for instance a glass substrate, an optical element such as a lens, a waveguide etc, or an optoelectronic device or a part thereof, such as a solid-state light source, e.g. an LED, an OLED or a laser diode.

The optical composition may be dispensed on the substrate by any suitable conventional method such as spin coating or blade coating, thereby preferably forming a layer of optical composition upon the substrate. Spin coating is typically used for compositions with low viscosity. The thickness of the layer of optical composition may be in the range of from 1 µm to 1000 µm, preferably in the range of from 10 µm to 200 µm, more preferably in the range of from 10 µm to 100 µm. By using spin coating, the thickness of the layer may typically be in the range of from 10 µm to 30 µm. By using blade coating, the thickness of the layer may typically be in the range of from 50 µm to 150 µm, preferably in the range of from 80 µm to 120 µm, more preferably about 100 µm. The thickness of the layer of optical composition is preferably uniform over the area of the substrate.

An additional optical element may be arranged on top of the layer of dispensed optical composition. The additional optical element may for instance be a lens, a waveguide etc, or an optoelectronic device or a part thereof, such as a solid-state light source, e.g. a LED, an OLED or a laser diode. Thus, an optical system may be formed.

In order to allow the optical composition to attach firmly to the substrate, it is preferable to heat the dispensed optical composition to a temperature in the range of from 80°C to 120°C; however the temperature may also be even higher than 120°C. The increase in temperature increases the tack of the optical composition, particularly the polysilsesquioxane, thereby enhancing attachment of the optical composition to the substrate. The heating also helps to remove excess solvent.

The optical bonding layer comprising the optical composition dispensed on the substrate may be cured. The optical composition may be cured by condensation, by catalysis or by UV irradiation. The polysiloxane may be a thermally curing system which requires heating, typically to a temperature in the range of from 80°C to 120°C, or even higher. Depending on the materials used, either a condensation curing or a catalysis curing may be preferred. The polysilsesquioxane may be condensation cured. The curing allows the polysilsesquioxane and optionally also the polysiloxane to form a network. If using polysilsesquioxane alone with the nanoparticles, i.e. no addition of polysiloxane, in the optical composition, the polysilsesquioxane network obtained by curing may tend to be relatively brittle. The mix of a polysilsesquioxane and a polysiloxane together with the nanoparticles may improve the flexibility of the network obtained by curing. The flexibility allows preparation of relatively thick and crack-free layers.

Before heating and curing, the polysilsesquioxane has a relatively low molecular weight.

Hence, the optical composition according to embodiments of the invention may be applied as an optical bond or optical bonding layer, or as an encapsulant, in an optical system for optically coupling light from one optical element to another or for out-coupling of light from an optical device. The optical bond may be transparent or translucent and allowing light to transfer from the first optical element through the optical composition and optionally to the second optical element while avoiding or reducing light losses. The optical coupling may be transparent or translucent and allowing light to transfer from the second optical element through the optical composition and the first optical element avoiding light losses.

### EXAMPLE 1A: Nanoparticle stabilization for preparation of an optical composition A

In a sample container, 3 g of nanoparticles comprising the oxide TiO₂, 3 g of a silsesquioxane-based material (silres604, supplied by Wacker; or AB 127719, supplied by ABCR) and 8 g of butylacetate were mixed.

Thereafter, the mixture was milled using zirconia milling balls. After milling, a particle size of 56 nm was measured using dynamic light scattering. The correlation function was indicative for a stable dispersion.

### EXAMPLE 1B: Nanoparticle stabilization for preparation of an optical composition B

In a sample container, 6 g of nanoparticles comprising the oxide SrTiO₃, 3 g of a silsesquioxane-based material (Silres604; Wacker, or AB127719) and 16 g of a solvent (butylacetate) were mixed.

Thereafter, the mixture was milled using zirconia milling balls. After milling, a particle size of 68 nm was measured using dynamic light scattering. The correlation function was indicative for a stable dispersion.

### EXAMPLE 2: Preparation and evaluation of an optical bonding layers

Firstly, optical bonding layer liquids comprising the above optical compositions, respectively, were prepared. To prepare the liquid, a silsesquioxane-based material (Silres604; Wacker), a solvent (butylacetate) and nanoparticles (TiO₂ or SrTiO₃, respectively) were prepared in the way similar to the ones described in Example 1a and 1b. The nanoparticle matrix ratio was chosen such as to yield a refractive index of 1.75 at 450 nm (measured by a UV/V is spectral ellipsometer).

Thereafter, the mixtures were further mixed with methyl/phenyl-based silicone resin (X45/717; Shin Etsu). Excess solvent (butyl acetate) was removed under reduced pressure.

Secondly, glass substrates were provided. Onto each substrate, a layer of the respective optical bonding layer liquid was dispensed. Various layer thicknesses were applied by conventional spincoating or blade coating.

Thereafter, the layers were subsequently cured; condensation curing of the polysilsesquioxane and catalysis curing activated by thermal treatment, according to the curing profile advised for the used silicone resin (X45/717; Shin Etsu). The resulting thick (100 µm) blade coated layers of silsesquioxane-based material (Silres604; Wacker) and methyl/phenyl-based silicone resin (X45/717; Shin Etsu) were completely transparent and showed no cracks at ratios of the silsesquioxane-based material to the silicone resin lower than 9. The diffuse reflection of the prepared layers according to embodiments of the invention ("SrTiO₃ in X45/silres" and "HTTi in X45/silres") was compared to a bonding layer formed from rutile TiO₂ dispersed in water and polyvinylpyrrolidone ("WJWR in pvp").The results are shown in Fig. 1. The prepared optical bonding layer comprising the optical composition according to embodiments of the invention showed a low diffuse reflection (2 %) for the layers comprising TiO₂ particles at a layer thickness of 5 µm. The prepared optical bonding layer comprising the optical composition showed a low diffuse reflection (7 %; value not shown in the figure) also for the layers comprising SrTiO₃ particles at a layer thickness of 5 µm. Even if the SrTiO₃ particles showed a higher diffuse reflection than the TiO₂ particles, the SrTiO₃ particles may sometimes be preferred due to a yellowish color that layers comprising TiO₂ particles may show.

### EXAMPLE 3. Preparation of an optical system including an attachment of a high index dome of the optical composition to an LED and its evaluation

In this example, an LED was provided as optical element. An optical bonding layer liquid comprising the optical composition was prepared as described in Example 2, and was thereafter dispensed on the light-emitting side of the LED.

Another optical bonding layer liquid without particles, similar to the one prepared in Example 2 except regarding to the particles, was also prepared, and was thereafter dispensed on the light-emitting side of another LED as a reference.

Residual solvent was removed from both optical bonding layers, followed by heating of the LEDs to an elevated temperature of 80-120°C. Subsequently, a high index glass dome of an optical bonding layer liquid comprising particles and an optical bonding layer liquid not comprising particles was applied onto each LED in contact with the optical bonding layer.

The apparent LED area, when viewed through each of the domes, was larger for the optical system comprising particles than for the optical system not comprising particles. This result was indicative for the higher refractive index of the optical system comprising particles thanks to the well-dispersed particles in the optical composition. The gain in wall plug efficiency was quantified using an integrating sphere. The wall plug efficiency was found to be 1.20 for the particle-free system. The wall plug efficiency was found to be up to 1.26 for the system comprising particles. Thus, the gain in wall plug efficiency was 5 %.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An optical composition comprising:
- a polysilsesquioxane comprising repeating units of the formula
[R-SiO_{1.5}]
wherein each R independently is hydrogen or a C₁-C₁₂ alkyl, aryl, alkene, arylene, alkenyl or alkoxy;
- a polysiloxane, optionally substituted; and
- particles dispersed in said polysiloxane, wherein said particles lack organic surface modification, and wherein the polysilsesquioxane stabilizes the particles in the optical composition.

2. An optical composition according to claim 1, wherein R is a C₁-C₁₂ alkyl or aryl.

3. An optical composition according to claim 2, wherein the polysilsesquioxane has a ratio of the number of methyl groups to the total number of R in the range of from 0.2 to 0.8, and/or a ratio of the number of phenyl groups to the total number of R in the range of from 0.2 to 0.8.

4. An optical composition according to claim 1, wherein the polysiloxane is a silicone resin.

5. An optical composition according to claim 1, wherein the ratio of polysilsesquioxane to polysiloxane is in the range of from 0.5 to 9.

6. An optical composition according to claim 1, wherein the particles have a particle size smaller than 100 nm.

7. An optical composition according to claim 1, wherein the particles have a particle size in the range of from 100 nm to 5 µm.

8. An optical composition according to claim 1, wherein the particles comprise at least one oxide selected from the group consisting of: TiO₂, BaTiO₃, SrTiO₃, ZrO₂, Al₂O₃ and SiO₂, and mixtures thereof.

9. An optical composition according to claim 1, wherein the particles comprise phosphor particles.

10. An optical bonding layer comprising the optical composition according to claim 1.

11. An optical system comprising the optical composition according to claim 1, a first optical element and a second optical element, wherein the first optical element is optically coupled to the second optical element by the optical composition.

12. An optical system according to claim 11, wherein the at least one of the first optical element and the second optical element is a solid-state light source, preferably a LED, an OLED or a laser diode.

13. A method for preparing an optical composition according to claim 1 comprising the steps of:
a) mixing a polysilsesquioxane with particles in a solvent, which particles lack organic surface modification;
b) milling the mixture from step a) to obtain a desirable average and/or maximum particle size of the mixture;
c) mixing the mixture from step b) with a polysiloxane; and
d) optionally removing excess solvent.

14. A method for producing an optical system according to claim 11 comprising the steps of:
a) providing a first optical element;
b) applying an optical composition according to claim 1 or an optical composition prepared according to claim 20 on the first optical element;
c) positioning a second optical element in contact with the optical composition; and
d) curing the optical composition or allowing the optical composition to cure.

15. Use of an optical composition according to claim 1 as an optical adhesive.

16. Use of a polysilsesquioxane comprising repeating units of the formula
[R-SiO_{1.5}]
wherein each R independently is hydrogen or a C₁-C₁₂ alkyl, aryl, alkene, arylene, alkenyl or alkoxy;
for dispersing particles in a polysiloxane material, which particles lack organic surface modification.

## Patentansprüche

1. Optische Zusammensetzung, die umfasst:
- ein Polysilsesquioxan, das Wiederholungseinheiten der Formel
[R-SiO_{1,5}]
umfasst, wobei jedes R unabhängig Wasserstoff oder ein C₁-C₁₂-Alkyl, Aryl, Alken, Arylen, Alkenyl oder Alkoxy ist;
- ein Polysiloxan, das optional substituiert ist; und
- Partikel, die im Polysiloxan dispergiert sind, wobei es den Partikeln an einer organischen Oberflächenmodifikation mangelt, und wobei das Polysilsesquioxan die Partikel in der optischen Zusammensetzung stabilisiert.

2. Optische Zusammensetzung nach Anspruch 1, wobei R ein C₁-C₁₂-Alkyl oder Aryl ist.

3. Optische Zusammensetzung nach Anspruch 2, wobei das Polysilsesquioxan ein Verhältnis der Anzahl von Methylgruppen zur Gesamtanzahl von R im Bereich von 0,2 bis 0,8 und/oder ein Verhältnis der Anzahl von Phenylgruppen zur Gesamtanzahl von R im Bereich von 0,2 bis 0,8 aufweist.

4. Optische Zusammensetzung nach Anspruch 1, wobei das Polysiloxan ein Silikonharz ist.

5. Optische Zusammensetzung nach Anspruch 1, wobei das Verhältnis von Polysilsesquioxan zu Polysiloxan im Bereich von 0,5 bis 9 liegt.

6. Optische Zusammensetzung nach Anspruch 1, wobei die Partikel eine Partikelgröße von weniger als 100 nm aufweisen.

7. Optische Zusammensetzung nach Anspruch 1, wobei die Partikel eine Partikelgröße im Bereich von 100 nm bis 5 µm aufweisen.

8. Optische Zusammensetzung nach Anspruch 1, wobei die Partikel zumindest ein Oxid umfassen, das aus der Gruppe ausgewählt ist, bestehend aus: TiO₂, BaTiO₃, SrTiO₃, ZrO₂, Al₂O₃ und SiO₂ und Mischungen davon.

9. Optische Zusammensetzung nach Anspruch 1, wobei die Partikel Phosphorpartikel umfassen.

10. Optische Bondingschicht, die die optische Zusammensetzung nach Anspruch 1 umfasst.

11. Optisches System, das die optische Zusammensetzung nach Anspruch 1, ein erstes optisches Element und ein zweites optisches Element umfasst, wobei das erste optische Element durch die optische Zusammensetzung mit dem zweiten optischen Element optisch gekoppelt ist.

12. Optisches System nach Anspruch 11, wobei das zumindest eine des ersten optischen Elements und des zweiten optischen Elements eine Festkörperlichtquelle ist, vorzugsweise eine LED, eine OLED oder eine Laserdiode.

13. Verfahren zum Herstellen einer optischen Zusammensetzung nach Anspruch 1, das die Schritte umfasst:
a) Mischen eines Polysilsesquioxans mit Partikeln in einem Lösungsmittel, wobei es den Partikeln an einer organischen Oberflächenmodifikation mangelt;
b) Mahlen der Mischung aus Schritt a), um eine wünschenswerte durchschnittliche und/oder maximale Partikelgröße der Mischung zu erhalten;
c) Mischen der Mischung aus Schritt b) mit einem Polysiloxan; und
d) optionales Entfernen von überschüssigem Lösungsmittel.

14. Verfahren zum Herstellen eines optischen Systems nach Anspruch 11, das die Schritte umfasst:
a) Bereitstellen eines ersten optischen Elements;
b) Auftragen einer optischen Zusammensetzung nach Anspruch 1 oder einer gemäß Anspruch 20 hergestellten optischen Zusammensetzung auf das erste optische Element;
c) Positionieren eines zweiten optischen Elements in Kontakt mit der optischen Zusammensetzung;
und
d) Härten der optischen Zusammensetzung oder Zulassen, dass die optische Zusammensetzung härtet.

15. Verwendung einer optischen Zusammensetzung nach Anspruch 1 als optischer Klebstoff.

16. Verwendung eines Polysilsesquioxans, das Wiederholungseinheiten der Formel
[R-SiO_{1,5}]
umfasst, wobei jedes R unabhängig Wasserstoff oder ein C₁-C₁₂-Alkyl, Aryl, Alken, Arylen, Alkenyl oder Alkoxy ist;
zum Dispergieren von Partikeln in einem Polysiloxanmaterial, wobei es den Partikeln an einer organischen Oberflächenmodifikation mangelt.

## Revendications

1. Composition optique comprenant :
- un polysilsesquioxane comprenant des motifs répétitifs de formule
[R-SiO_{1,5}]
dans laquelle chaque R est l'hydrogène ou un radical en C₁ à C₁₂ alkyle, aryle, alcène, arylène, alcényle ou alcoxy ;
- un polysiloxane éventuellement substitué ; et
- des particules dispersées dans ledit polysiloxane,
dans laquelle lesdites particules sont dépourvues de modification de surface organique, et dans laquelle le polysilsesquioxane stabilise les particules dans la composition optique.

2. Composition optique selon la revendication 1, dans laquelle R est un radical en C₁ à C₁₂ alkyle ou aryle.

3. Composition optique selon la revendication 2, dans laquelle le polysilsesquioxane a un rapport du nombre de groupes méthyle au nombre total de R situé dans la plage allant de 0,2 à 0,8, et/ou un rapport du nombre de groupes phényle au nombre total de R situé dans la plage allant de 0,2 à 0,8.

4. Composition optique selon la revendication 1, dans laquelle le polysiloxane est une résine siliconée.

5. Composition optique selon la revendication 1, dans laquelle le rapport du polysilsesquioxane au polysiloxane est situé dans la plage allant de 0,5 à 9.

6. Composition optique selon la revendication 1, dans laquelle les particules ont une granulométrie inférieure à 100 nm.

7. Composition optique selon la revendication 1, dans laquelle les particules ont une granulométrie située dans la plage allant de 100 nm à 5 µm.

8. Composition optique selon la revendication 1, dans laquelle les particules comprennent au moins un oxyde choisi dans l'ensemble constitué par : TiO₂, BaTiO₃, SrTiO₃, ZrO₂, Al₂O₃ et SiO₂, ainsi que leurs mélanges.

9. Composition optique selon la revendication 1, dans laquelle les particules comprennent des particules luminescentes.

10. Couche de collage optique comprenant la composition optique selon la revendication 1.

11. Système optique comprenant la composition optique selon la revendication 1, un premier élément optique et un deuxième élément optique, dans lequel le premier élément optique est optiquement couplé au deuxième élément optique par la composition optique.

12. Système optique selon la revendication 11, dans lequel au moins l'un parmi le premier élément optique et le deuxième élément optique est une source de lumière à semiconducteur, de préférence une DEL, une OLED ou une diode laser.

13. Procédé pour préparer une composition optique selon la revendication 1, comprenant les étapes suivantes :
a) mélange d'un polysilsesquioxane avec des particules dans un solvant, lesquelles particules sont dépourvues de modification de surface organique ;
b) broyage du mélange de l'étape a) pour que soit obtenue une granulométrie moyenne et/ou maximale souhaitable du mélange ;
c) mélange du mélange de l'étape b) avec un polysiloxane ; et
d) éventuellement élimination du solvant en excès.

14. Procédé pour produire un système optique selon la revendication 11, comprenant les étapes suivantes :
a) obtention d'un premier élément optique ;
b) application d'une composition optique selon la revendication 1 ou d'une composition optique préparée conformément à la revendication 20 sur le premier élément optique ;
c) positionnement d'un deuxième élément optique en contact avec la composition optique ; et
d) durcissement de la composition optique ou sinon la composition optique est laissée à durcir.

15. Utilisation d'une composition optique selon la revendication 1 en tant qu'adhésif optique.

16. Utilisation d'un polysilsesquioxane comprenant des motifs répétitifs de formule
[R-SiO_{1,5}]
dans laquelle chaque R est l'hydrogène ou un radical en C₁ à C₁₂ alkyle, aryle, alcène, arylène, alcényle ou alcoxy ;
pour disperser des particules dans un matériau polysiloxane, lesquelles particules sont dépourvues de modification de surface organique.
